# EUROPÄISCHE PATENTSCHRIFT

(11) **EP 2 824 278 B1**
(45) Veröffentlichungstag und Bekanntmachung des Hinweises auf die Patenterteilung: **07.11.2018**
(21) Anmeldenummer: 14173709.8
(22) Anmeldetag: 08.07.2013
(51) Int. Cl.: F01D 9/00, F01D 25/24, F01D 25/28

(54) **Vorrichtung, Schaufel-Vorrichtungs-Verbund, Verfahren sowie Strömungsmaschine**
Device, blade-device group, method and flow engine
Dispositif, composé aubes-dispositif, procédé et turbomachine

(43) Veröffentlichungstag der Anmeldung: 14.01.2015
(62) Teilanmeldung aus: 13175492.1
(73) Patentinhaber: MTU Aero Engines AG, 80995 München (DE)
(72) Erfinder: Stricker, Hans Dr., 81245 München (DE); Rauscher, Stefan, 86551 Aichach (DE); Bokhorst, Willem, 85757 Karlsfeld (DE)

(56) Entgegenhaltungen:
- EP-A1- 0 331 837
- GB-A- 805 545
- US-A- 5 232 340
- US-A- 5 411 369

## Beschreibung

### Beschreibung

Die Erfindung betrifft eine Vorrichtung zur Positionierung zumindest einer Leitschaufelreihe in einer Strömungsmaschine nach dem Oberbegriff des Patentanspruchs 1, einen Schaufel-Vorrichtungs-Verbund einer Strömungsmaschine, ein Verfahren zum Montieren eines Schaufel-Vorrichtungs-Verbundes sowie eine Strömungsmaschine. Eine solche Vorrichtung ist beispielsweise aus der US-A-5 411 369 bekannt.

Leitschaufeln in Niederdruckturbinen von Strömungsmaschinen sind häufig in mehreren Reihen hintereinander in einer als Trommel bezeichneten Vorrichtung angeordnet, die außenumfangsseitig fest mit einem Gehäuseabschnitt der Niederdruckturbine verbunden sind. Bevorzugterweise sind die Leitschaufeln einer Reihe zu Leitschaufelgruppen zusammengefasst, so dass mehrere Leitschaufeln gleichzeitig in der Trommel positioniert werden können. Zur innenumfangsseitigen Positionierung hat die Trommel innenumfangsseitig eine Vielzahl von gleichmäßig verteilten Aufnahmen zur Aufnahme von Halteelementen der Leitschaufelgruppen. Die Aufnahmen sind herkömmlicherweise Axialnuten und die Halteelemente sind radial außenliegende Axialrippen. Zur Gewichtsreduzierung sowie zur strukturmechanischen Optimierung der Vorrichtung bzw. der Trommel ist zwischen den Axialnuten herkömmlicherweise eine Vielzahl von innenumfangsseitigen Aussparungen, sogenannten "Scallops" vorgesehen. Die Aussparungen begünstigen jedoch eine Fehlpositionierung der Leitschaufelgruppe in Umfangsrichtung, da diese mit ihren Haltelementen bzw. Rippen in die Aussparungen eintauchen können und so eine Soll-Position der Leitschaufelgruppen vorgetäuscht wird. Eine nicht erkannte Fehlposition führt jedoch im Betreib zu erheblichen Schäden in der Strömungsmaschine. Aufgabe der Erfindung ist es, eine Vorrichtung zur Positionierung zumindest einer Leitschaufelreihe in einer Strömungsmaschine zu schaffen, bei der eine fehlerhafte Positionierung von Leitschaufelgruppen in Umfangsrichtung verhindert wird. Des Weiteren ist es Aufgabe der Erfindung, einen Schaufel-Vorrichtungs-Verbund einer Strömungsmaschine zu schaffen, deren Leitschaufelgruppen an ihren Soll-Positionen in der Vorrichtung positioniert sind. Zudem ist es Aufgabe der Erfindung, ein Verfahren zum Montieren eines derartigen Schaufel-Vorrichtungs-Verbundes sowie eine Strömungsmaschine mit optimal in einer Vorrichtung positionierten Leitschaufeln zu schaffen.

Diese Aufgabe wird gelöst, durch eine Vorrichtung mit den Merkmalen des Patentanspruchs 1, durch einen Schaufel-Vorrichtungs-Verbund mit den Merkmalen des Patentanspruchs 7, durch ein Verfahren mit den Merkmalen des Patentanspruchs 9 sowie durch eine Strömungsmaschine mit den Merkmalen des Patentanspruchs 10.

Eine erfindungsgemäße Vorrichtung zur Positionierung zumindest einer Leitschaufelreihe in einer Strömungsmaschine, wobei die Leitschaufelreihe Leitschaufelgruppen aufweist, die jeweils zumindest zwei Leitschaufeln und jeweils zumindest zwei in Umfangsrichtung voneinander beabstandete Halteelemente zur Anbindung an der Vorrichtung hat, weist außenumfangsseitig zumindest einen Flansch zur Befestigung an einem Gehäuseabschnitt der Strömungsmaschine und innenumfangsseitig eine Vielzahl von gleichmäßig verteilten Aufnahmen zur Aufnahme der Halteelemente sowie eine Vielzahl von Aussparungen auf. Erfindungsgemäß hat die Vorrichtung zwischen zumindest zwei benachbarten Aufnahmen einen tiefenreduzierten Innenumfangsabschnitt bezogen auf die Aufnahmen, der sich jeweils von der einen Aufnahme zur anderen Aufnahme erstreckt.

Durch den zumindest einen tiefenreduzierten Innenumfangsabschnitt wird eine Anordnung der Leitschaufelgruppen in ihren Soll-Positionen gewährleistet. Denn wenn die zuerst eingesetzte Leitschaufel an dem tiefenreduzierten Innenumfangsabschnitt ausgerichtet wird, ist eine Fehlpositionierung der folgenden Leitschaufelreihen ausgeschlossen. Wenn jedoch in einem Abstand zum zumindest einen tiefenreduzierten Innenumfangsabschnitt eine Leitschaufelgruppe in die Vorrichtung eingesetzt wird und dann eine folgende Leitschaufelgruppe auf den zumindest einen tiefenreduzierten Innenumfangsabschnitt aufläuft, ist auch hierdurch eine Fehlpositionierung der Leitschaufeln ausgeschlossen. Gleichzeitig werden durch die verbleibenden Aussparungen leichtbau- und strukturmechanische Anforderungen erfüllt.

Bei einem Ausführungsbeispiel sind mehrere tiefenreduzierte Innenumfangsabschnitte vorgesehen, die mit den Aussparungen in Umfangsrichtung wechselseitig angeordnet sind.

Hierdurch kann mit der Montage der Leitschaufelgruppen in die Vorrichtung an einer beliebigen Position begonnen werden, da die Leitschaufelgruppe, die zuerst in die Vorrichtung eingesetzt wird, bei einer Fehlpositionierung sofort auf einen tiefenreduzierten Innenumfangsabschnitt aufläuft, unabhängig vom einer umfangsseitigen Einsetzposition. Gleichzeitig werden nachwievor leichtbau- und strukturmechanische Anforderungen erfüllt, da sich die tiefenreduzierten Innenumfangsabschnitte nicht zwischen sämtlichen Aufnahmen erstrecken, sondern nur zwischen einigen der Aufnahmen.

Bevorzugterweise weist die Vorrichtung in Axialrichtung versetzt Aufnahmen, Aussparungen und tiefenreduzierte Innenumfangsabschnitte zur Anordnung von mehreren Leitschaufelreihen hintereinander auf.

Die Montage, der in Strömungsrichtung hintereinander angeordneten Leitschaufelreihen lässt sich vereinfachen, wenn die in Axialrichtung zueinander versetzten tiefenreduzierten Innenumfangsabschnitte nahezu an gleicher Umfangsposition angeordnet sind.

Bei einem Ausführungsbeispiel haben die tiefenreduzierten Innenumfangsabschnitte eine Tiefe gleich Null (= 0) bezogen auf einen Innenradius der Vorrichtung, von dem sich die Aufnahmen radial nach außen erstrecken. Bei diesem Ausführungsbeispiel sind die Innenumfangsabschnitte als aussparungsfreie Abschnitte ausgebildet, sodass eine ursprüngliche Konturierung des Innenumfangs der Vorrichtung fortgeführt werden kann.

Ein erfindungsgemäßer Schaufel-Vorrichtungs-Verbund einer Strömungsmaschine hat eine erfindungsgemäße Vorrichtung, die mit zumindest einer Leitschaufelreihe versehen ist, die Leitschaufelgruppen aufweist. Ein derartiger Schaufel-Vorrichtungs-Verbund weist zumindest eine Leitschaufelreihe auf, deren Leitschaufelgruppen an ihren umfangsseitigen Soll-Positionen angeordnet sind. Bevorzugterweise ist die Vorrichtung eine Trommel und nimmt mehrere Leitschaufelreihen hintereinander auf.

Die Montage des Schaufel-Vorrichtungs-Verbundes lässt sich vereinfachen, wenn die Anzahl von tiefenreduzierten Innenumfangsabschnitten kleiner oder gleich der Anzahl der Leitschaufelgruppen ist, da hierdurch die Leitschaufelgruppen an einer beliebigen Umfangsposition in die Vorrichtung eingesetzt werden können und sofort erkannt wird, ob die Leitschaufelgruppe, die gerade eingesetzt wird, richtig positioniert ist.

Bei einem erfindungsgemäßen Verfahren zum Montieren eines Schaufel-Vorrichtungs-Verbundes einer Strömungsmaschine wird zuerst eine erfindungsgemäße Vorrichtung bereitgestellt. Dann werden Leitschaufelgruppen zur Bildung einer Leitschaufelreihe bereitgestellt. Anschließend werden die Leitschaufelgruppen in die Vorrichtung eingesetzt, wobei die zuerst eingesetzte Leitschaufelgruppe an zumindest einem tiefenreduzierten Innenumfangsabschnitt ausgerichtet wird. Dadurch, dass die zuerst eingesetzte Leitschaufelgruppe am zumindest einem tiefenreduzierten Innenumfangsabschnitt ausgerichtet wird, ist eine Fehlpositionierung dieser Leitschaufelgruppe und somit eine Fehlpositionierung der folgenden Leitschaufelgruppen verhindert, da bei einer Fehlpositionierung diese Leitschaufelgruppe auf den zumindest einen tiefenreduzierten Innenumfangsabschnitt aufläuft und sich somit in der Fehlposition nicht montieren lässt. Wenn sich dann die zuerst eingesetzte Leitschaufelgruppe bereits in einer Soll-Position befindet, werden automatisch auch die folgenden Leitschaufelgruppen in ihren Soll-Positionen montiert.

Eine erfindungsgemäße Strömungsmaschine hat zumindest einen erfindungsgemäßen Schaufel-Vorrichtungs-Verbund und zeichnet sich hierdurch durch eine optimale Anordnung der Leitschaufelreihen im Bereich der Vorrichtung aus. Bevorzugterweise ist die Strömungsmaschine eine Gasturbine und insbesondere in der Niederdruckturbine der Gasturbine angeordnet.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: eine stromaufwärtige Sicht auf eine erfindungsgemäße Vorrichtung,
- Figur 2: eine Detaildarstellung der Vorrichtung aus Figur 1,
- Figur 3: eine Soll-Positionierung einer Leitschaufelgruppe in der Vorrichtung, und
- Figur 4: eine verhinderte Fehlpositionierung einer Leitschaufelgruppe in der Vorrichtung.

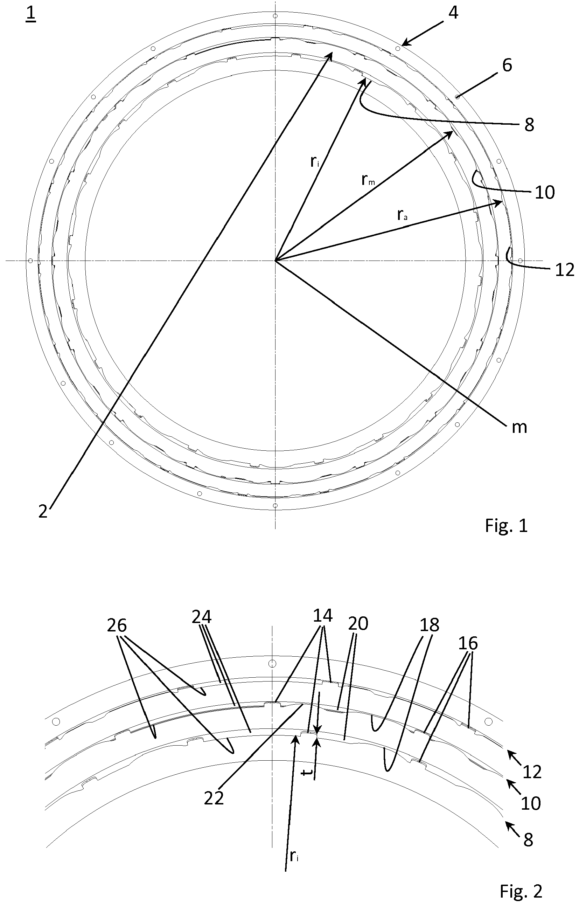

In Figur 1 ist eine rückwärtige Ansicht einer erfindungsgemäßen Vorrichtung 1 zur Positionierung zumindest einer Leitschaufelreihe in einer Strömungsmaschine gezeigt. Rückwärtig bedeutet, dass der Blick des Betrachters stromaufwärts bzw. gegen die Strömungsrichtung eines die Strömungsmaschine durchströmenden Heißgases gerichtet ist. Die Strömungsmaschine ist beispielsweise ein Flugtriebwerk und insbesondere eine Gasturbine. Die Vorrichtung 1 hat einen dünnwandigen trommelförmiger Körper bzw. eine Trommel 2, die in Strömungsrichtung betrachtet, bezogen auf eine axiale Maschinenachse m radial bzw. konisch, erweitert ist. In Figur 1 gezeigt ist somit ein Blick in die Vorrichtung 1 hinein auf deren Innenumfang gezeigt, wobei sich in Blickrichtung die Vorrichtung 1 radial bzw. konisch verjüngt. Bevorzugterweise ist die Vorrichtung 1 in der Niederdruckturbine der Strömungsmaschine angeordnet.

Die Vorrichtung 1 wird in einem Gehäuseabschnitt der Strömungsmaschine eingesetzt und hat hierzu außenumfangsseitig ihres trommelförmigen Körpers 2 einen Flanschring 4, der eine Vielzahl von Befestigungsohren aufweist, in denen jeweils eine Axialbohrung 6 zum Durchführen jeweils einer Befestigungsschraube ausgebildet ist. Die Vorrichtung 1 dient in dem hier gezeigten Ausführungsbeispiel zur Aufnahme von vier in Strömungsrichtung hintereinander angeordneten Leitschaufelreihen. Aus Gründen der Übersichtlichkeit werden im Folgenden lediglich drei Leitschaufelreihen betrachtet. Die vierte nicht betrachtete Leitschaufelreihe ist jedoch analog zu den drei betrachteten Leitschaufelreihen ausgeführt.

Aufgrund der radialen Erweiterung der Vorrichtung 1 in Strömungsrichtung bezogen auf einen mittleren Ringsteg 10 zur Aufnahme einer mittleren Leitschaufelreihe ist ein vorderer Ringsteg 8 zur Aufnahme einer vorderen Leitschaufelreihe radial innen und ein hinterer Ringsteg 12 zur Aufnahme einer hinteren Leitschaufelreihe radial außen angeordnet ist. Die Ringstege 8, 10, 12 und die Leitschaufelreihen liegen somit auf unterschiedlichen Innenradien rᵢ, rₘ, rₐ.

Wie in Figur 2 gezeigt, weist jeder Ringsteg 8, 10, 12 eine Vielzahl von gleichmäßig verteilten Aufnahmenuten 14, 16 zur Fixierung der jeweiligen Leitschaufelreihe auf. Die Aufnahmenuten 14, 16 erstrecken sich in Axialrichtung durch den jeweiligen Ringsteg 8, 10, 12 hindurch und sind somit beidseits axial und radial innen geöffnet. Sie haben in dem hier gezeigten Ausführungsbeispiel einen rechteckigen Querschnitt mit einer konstanten Tiefe t bzw. radialen Erstreckung. Die Tiefe t wird jeweils von einer Ringsteginnenumfangsfläche abgetragen, dem der jeweilige Innenradien rᵢ, rₘ, rₐ.zugeordnet ist.

Zur Gewichtsreduzierung und/oder zur Einstellung von strukturmechanischen Eigenschaften der Vorrichtung 1 kann, wie an dem vorderen Ringsteg 8 und dem mittleren Ringsteg 10 illustriert, zwischen zwei benachbarten Aufnahmenuten 14, 16 zumindest eine Aussparung 18 vorgesehen sein. In dem hiergezeigten Ausführungsbeispiel weist der vordere Ringsteg 8 zwischen mehreren benachbarten Aufnahmenuten 14, 16 jeweils eine Aussparung 18 und einen profilfreien Abschnitt 20 auf. Der mittlere Ringsteg 10 hingegen, weist in dem hier gezeigten Ausführungsbeispiel zwischen mehreren benachbarten Aufnahmenuten 14, 16 zwei Aussparungen 18, 22 auf, die über einen profilfreien bzw. nicht-konturierten Abschnitt 20 voneinander beabstandet sind. Zur Vermeidung von Spannungsspitzen sind die Aussparungen 16, 18 in dem hier gezeigten Ausführungsbeispiel konkav und somit als Auswölbungen bzw. wannenartige Konturen ausgebildet. Bevorzugterweise haben sie eine Tiefe, die gleich oder sogar größer als die Tiefe der Aufnahmenuten 16, 18 ist.

Sämtliche Ringstege 8, 10, 12 weisen jeweils zumindest einen tiefenreduzierten Innenumfangsabschnitt 24 bezogen auf zwei benachbarte Aufnahmenuten 14, 16 auf, der sich jeweils von der einen Aufnahmenut 14 zur anderen Aufnahmenut 16 erstreckt. Die tiefenreduzierten Innenumfangsabschnitte 24 der Ringstege 8, 10, 12 sind nahezu an gleicher Umfangsposition angeordnet und haben bezogen auf die jeweilige Ringsteginnenumfangsfläche, von der sich die Aufnahmenuten 14, 16 radial nach außen erstrecken, eine Tiefe gleich Null, sodass die tiefenreduzierten Innenumfangsabschnitte 24 in dem hier gezeigten Ausführungsbeispiel aussparungsfrei sind bzw. eine ursprüngliche Kontur der Ringsteginnenumfangsfläche nachzeichnen. In dem hier gezeigten Ausführungsbeispiel haben die tiefenreduzierten Innenumfangsabschnitte 24 somit eine konkave Oberfläche 26, die gleich der durch die Aufnahmen 14, 16 und Aussparungen 18, 20 unterbrochenen Ringsteginnenumfangsfläche ist.

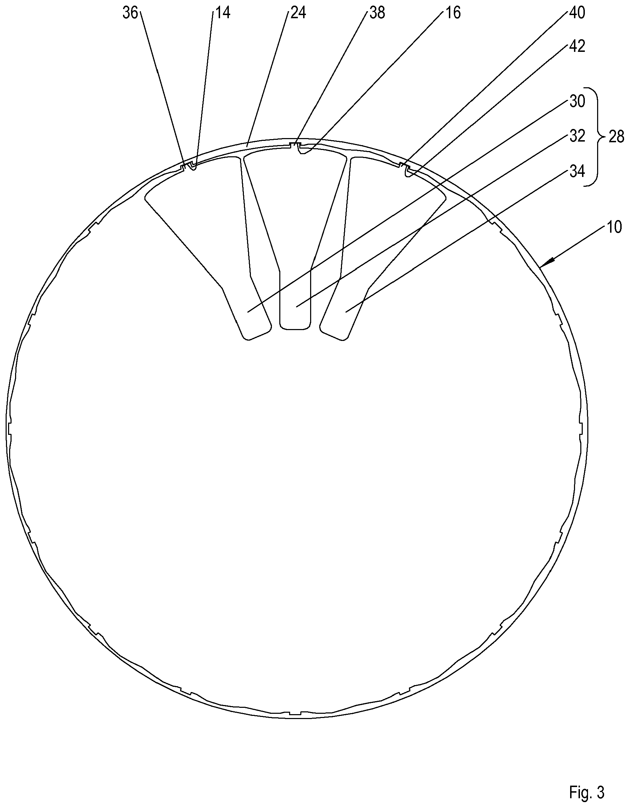

Wie in Figur 3 am mittleren Ringsteg 10 angedeutet, weist jede Leitschaufelreihe eine Vielzahl von Leitschaufelgruppen 28 auf, die sich wiederum aus einer Vielzahl von Leitschaufeln 30, 32, 34 zusammensetzen. In dem hier gezeigten Ausführungsbeispiel hat die Leitschaufelgruppe 28 drei Leitschaufeln 30, 32, 34 die jeweils mit einem radial außen liegenden Halteelement 36, 38, 40 zum Eingreifen in jeweils eine der Aufnahmenuten 14, 16, 42 versehen sind. Selbstverständlich sind auch lediglich zwei Halteelemente 36, 38, 40 möglich. Die Halteelemente 36, 38, 40 sind in Umfangsrichtung voneinander beabstandet und beispielweise axiale Rippen, die formschlüssig mit den Aufnahmenuten 14, 16, 42 zusammenwirken.

Bei einem erfindungsgemäßen Verfahren zum Montieren des in Figur 3 angedeuteten Schaufel-Vorrichtungs-Verbundes wird zuerst die Vorrichtung 1 bereitgestellt. Dann werden die Leitschaufelgruppen 28 der jeweiligen Leitschaufelreihe bereitgestellt. Anschließend werden die Leitschaufelgruppen 28 mit ihren Halteelementen 36, 38, 40 in die Aufnahmenuten 14, 16, 42 der Vorrichtung 1 eingesetzt, wobei die zuerst eingesetzte Leitschaufelgruppe am zumindest einen tiefenreduzierten Innenumfangsabschnitt 24 ausgerichtet wird. Beim Auflaufen zumindest eines der Halteelementes 36, 38, 40 auf den tiefenreduzierten Innenumfangsabschnitt 24 wird die Leitschaufelgruppe 28 in Umfangsrichtung versetzt und dadurch in ihre Soll-Position überführt. Anschließend wird die nächste Leitschaufelgruppe in die Vorrichtung 1 eingesetzt, wobei sie an der vorhergehenden Leitschaufelgruppe 28 ausgerichtet wird und hierdurch eine Fehlpositionierung verhindert wird. Dies wird solange wiederholt, bis sämtliche Leitschaufelgruppen 28 der Leitschaufelreihe eingesetzt sind.

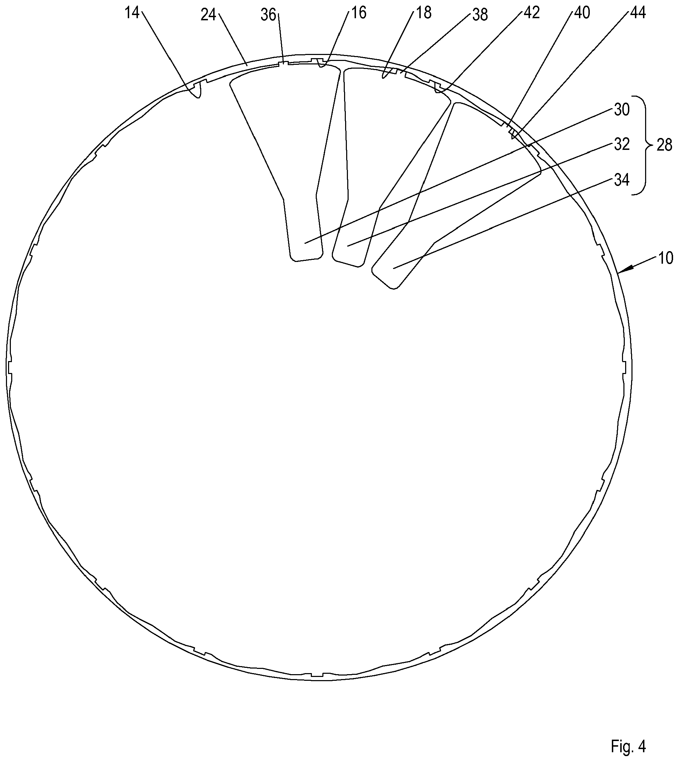

Wie in Figur 4 gezeigt, lässt sich nämlich dadurch, dass der tiefenreduzierte Innenumfangsabschnitt 24 flacher als die Aufnahmenuten 14, 16, 42 ausgebildet ist, die Leitschaufelgruppe 28 nicht montieren. Das Auflaufen des hier linken Halteelements 36 auf die tiefenreduzierten Innenumfangsabschnitt 24 verhindert ein Einsetzen der Leitschaufelgruppe 28. Durch das Auflaufen wird einem Monteur somit angezeigt, dass sich die Leitschaufelgruppe 28 nicht in ihrer Soll-Position befindet, sondern umfangsseitig in einer Fehlposition, in der das mittlere Halteelement 38 und das rechte 40 Halteelement anstatt in die Aufnahmenuten 16, 42 einzugreifen in die Aussparungen 18, 44 eintauchen. Als Folge versetzt der Monteur die Leitschaufelgruppe 28 in Umfangsrichtung, bis sie sich in Axialrichtung relativ zur Vorrichtung 1 verschieben lässt. Gemäß der Darstellung in Figur 3 wird die Leitschaufelgruppe 28 nach links versetzt. Die Leitschaufelgruppe 28 greift nun mit ihren Halteelementen 36, 38, 40 in jeweils einer der Aufnahmenuten 14, 16, 42 ein und befindet sich in ihrer Soll-Position. Der sich zwischen den Aufnahmenuten 14, 16 befindende tiefenreduzierte Innenumfangsabschnitt 24 behindert nun, da sich die Leitschaufelgruppe 28 in ihrer Soll-Position befindet, die Montage nicht.

Offenbart ist eine Vorrichtung wie eine Trommel zur Positionierung zumindest einer Leitschaufelreihe aus einer Vielzahl von Leitschaufelgruppen in einer Strömungsmaschine, wobei die Vorrichtung außenumfangsseitig zumindest einen Flansch zur Befestigung an einem Gehäuseabschnitt der Strömungsmaschine und innenumfangsseitig eine Vielzahl von gleichmäßig verteilten Aufnahmen zur Aufnahme von Halteelementen der Leitschaufelgruppen sowie eine Vielzahl von Aussparungen hat, wobei die Vorrichtung zwischen zumindest zwei benachbarten Aufnahmen einen tiefenreduzierten Innenumfangsabschnitt bezogen auf die Aufnahmenuten hat, der sich jeweils von der einen Aufnahme zur anderen Aufnahme erstreckt, ein Schaufel-Vorrichtungs-Verbund, ein Verfahren zum Montieren eines derartigen Schaufel-Vorrichtungs-Verbundes, sowie eine Strömungsmaschine.

### Bezugszeichenliste

- 1: Vorrichtung / Trommel
- 2: Körper
- 4: Flanschring
- 6: Axialbohrung
- 8: Ringsteg
- 10: Ringsteg
- 12: Ringsteg
- 14: Aufnahmenut
- 16: Aufnahmenut
- 18: Aussparung
- 20: profilfreier Abschnitt
- 16: Aussparung
- 20: Aussparung
- 24: tiefenreduzierte Innenumfangsabschnitt
- 26: Oberfläche
- 28: Leitschaufelgruppe
- 30: Leitschaufel
- 32: Leitschaufel
- 34: Leitschaufel
- 36: Halteelement / Rippe
- 38: Halteelement / Rippe
- 40: Halteelement / Rippe
- 42: Aufnahmenut
- 44: Aussparung

- m: Maschinenachse
- rᵢ: Innenradius des vorderen Ringstegs
- rₘ: Innenradius des mittleren Ringstegs
- rₐ: Innenradius des hinteren Ringstegs
- t: Tiefe

## Patentansprüche

1. Vorrichtung (1) zur Positionierung in Umfangsrichtung zumindest einer Leitschaufelreihe in einer Strömungsmaschine, wobei die Leitschaufelreihe Leitschaufelgruppen (28) umfasst, die jeweils zumindest zwei Leitschaufeln (30, 32, 34) und jeweils zumindest zwei in Umfangsrichtung voneinander beanstandete Halteelemente (36, 38, 40) zur Anbindung an der Vorrichtung (1) aufweisen, wobei die Vorrichtung (1) außenumfangsseitig zumindest einen Flansch (4) zur Befestigung an einem Gehäuseabschnitt der Strömungsmaschine und innenumfangsseitig eine Vielzahl von gleichmäßig verteilten Aufnahmen (14, 16, 42) zur Aufnahme der Halteelemente (36, 38, 40) sowie eine Vielzahl von Aussparung (18, 20, 44) hat, **dadurch gekennzeichnet, dass** die Vorrichtung (1) zwischen zumindest zwei benachbarten Aufnahmen (14, 16, 42) einen tiefenreduzierten Innenumfangsabschnitt (24) bezogen auf die Aufnahmen (14, 16, 42) hat, der sich jeweils von der einen Aufnahme zur anderen Aufnahme erstreckt.

2. Vorrichtung nach Anspruch 1, wobei die Vorrichtung (1) eine Trommel ist, zur Aufnahme mehrerer Leitschaufelreihen hintereinander.

3. Vorrichtung nach Anspruch 1 oder 2, wobei mehrere tiefenreduzierte Innenumfangsabschnitte (24) vorgesehen sind, die mit den Aussparungen (18, 20, 44) in Umfangsrichtung wechselseitig angeordnet sind.

4. Vorrichtung nach einem der vorhergehenden Ansprüche, wobei in Axialrichtung versetzte Aufnahmen (14, 16, 42), Aussparungen und tiefenreduzierte Innenumfangsabschnitte (24) zur Anordnung von mehreren Leitschaufelreihen hintereinander ausgebildet sind.

5. Vorrichtung nach Anspruch 4, wobei die in Axialrichtung zueinander versetzten tiefenreduzierten Innenumfangsabschnitte (24) nahezu an gleicher Umfangsposition angeordnet sind.

6. Vorrichtung nach einem der vorhergehenden Ansprüche, wobei die tiefenreduzierten Innenumfangsabschnitte (24) eine Tiefe = 0 bezogen auf einen Innenradius (rᵢ, rₘ, rₐ) der Vorrichtung (1) haben, von dem sich die Aufnahmen (14, 16, 42) radial nach außen erstrecken.

7. Schaufel-Vorrichtungs-Verbund einer Strömungsmaschine, mit einer Vorrichtung (1) nach einem der vorhergehenden Ansprüche, die mit zumindest einer Leitschaufelreihe versehen ist, die Leitschaufelgruppen (28) aufweist.

8. Schaufel-Vorrichtungs-Verbund nach Anspruch 7, wobei die Anzahl von tiefenreduzierten Innenumfangsabschnitten (24) kleiner oder gleich der Anzahl der Leitschaufelgruppen (28) ist.

9. Verfahren zum Montieren eines Schaufel-Vorrichtungs-Verbunds einer Strömungsmaschine, mit den Schritten:
- Bereitstellen einer Vorrichtung (1) nach einem der Ansprüche 1 bis 6,
- Bereitstellen von Leitschaufelgruppen (28), und
- Einsetzen der Leitschaufelgruppen (28) in die Vorrichtung (1), wobei die zuerst eingesetzte Leitschaufelgruppe (28) am zumindest einen tiefenreduzierten Innenumfangsabschnitt (24) ausgerichtet wird.

10. Strömungsmaschine mit einem Schaufel-Vorrichtungs-Verbund nach einem der Ansprüche 7 oder 8.

## Claims

1. Device (1) for positioning, in the circumferential direction, at least one row of guide vane in a turbomachine, the row of guide vanes comprising groups (28) of guide vanes that each comprise at least two guide vanes (30, 32, 34) and at least two holding elements (36, 38, 40), which are mutually spaced in the circumferential direction, for connection to the device (1), the device (1) having, on the outer circumference, at least one flange (4) for fastening to a housing portion of the turbomachine and, on the inner circumference, a plurality of uniformly distributed receptacles (14, 16, 42) for receiving the holding elements (36, 38, 40) and a plurality of recesses (18, 20, 44), **characterized in that** the device (1) has, between at least two adjacent receptacles (14, 16, 42), a depth-reduced inner circumferential portion (24) with respect to the receptacles (14, 16, 42), which portion extends from one receptacle to the other receptacle in each case.

2. Device according to claim 1, wherein the device (1) is a drum for receiving a plurality of rows of guide vanes in succession.

3. Device according to either claim 1 or claim 2, wherein a plurality of depth-reduced inner circumferential portions (24) are provided that are arranged so as to alternate with the recesses (18, 20, 44) in the circumferential direction.

4. Device according to any of the preceding claims, wherein receptacles (14, 16, 42), recesses and depth-reduced inner circumferential portions (24) that are offset in the axial direction are designed for arranging a plurality of rows of guide vanes one behind the other.

5. Device according to claim 4, wherein the depth-reduced inner circumferential portions (24) that are offset with respect to one another in the axial direction are arranged at virtually the same circumferential position.

6. Device according to any of the preceding claims, wherein the depth-reduced inner circumferential portions (24) have a depth = 0 relative to an inner radius (rᵢ, rₘ, rₐ) of the device (1), from which inner radius the receptacles (14, 16, 42) extend radially outwards.

7. Vane-device combination of a turbomachine, comprising a device (1) according to any of the preceding claims that is provided with at least one row of guide vanes which comprises groups (28) of guide vanes.

8. Vane-device combination according to claim 7, wherein the number of depth-reduced inner circumferential portions (24) is less than or equal to the number of groups (28) of guide vanes.

9. Method for assembling a vane-device combination of a turbomachine, comprising the steps of:
- providing a device (1) according to any of claims 1 to 6,
- providing groups (28) of guide vanes, and
- inserting the groups (28) of guide vanes into the device (1), wherein the group (28) of guide vanes that is inserted first is aligned with at least one depth-reduced inner circumferential portion (24).

10. Turbomachine having a vane-device combination according to either claim 7 or claim 8.

## Revendications

1. Dispositif (1) destiné au positionnement, dans la direction circonférentielle, d'au moins une rangée d'aubes directrices dans une turbomachine, la rangée d'aubes directrices comprenant des groupes d'aubes directrices (28) qui comportent chacun au moins deux aubes directrices (30, 32, 34) et chacun au moins deux éléments de retenue (36, 38, 40) espacés l'un de l'autre dans la direction circonférentielle et destinés à être reliés au dispositif (1), le dispositif (1) comportant, du côté circonférentiel extérieur, au moins une bride (4) destinée à être fixée sur une portion de carter de la turbomachine et, du côté circonférentiel intérieur, une pluralité de logements (14, 16, 42) répartis uniformément et destinés à recevoir les éléments de retenue (36, 38, 40), ainsi qu'une pluralité d'évidements (18, 20, 44), **caractérisé en ce que**, entre au moins deux logements (14, 16, 42) voisins, le dispositif (1) comporte une portion circonférentielle intérieure (24) de profondeur réduite par rapport aux logements (14, 16, 42), laquelle s'étend respectivement d'un logement à l'autre logement.

2. Dispositif selon la revendication 1, le dispositif (1) étant un tambour destiné à recevoir plusieurs rangées d'aubes directrices les unes derrière les autres.

3. Dispositif selon la revendication 1 ou 2, plusieurs portions circonférentielles intérieures (24) de profondeur réduite étant prévues qui sont disposées de façon alternée avec les évidements (18, 20, 44) dans la direction circonférentielle.

4. Dispositif selon l'une des revendications précédentes, des logements (14, 16, 42), évidements et portions circonférentielles intérieures (24) de profondeur réduite décalés dans la direction axiale étant constitués pour l'agencement de plusieurs rangées d'aubes directrices les unes derrière les autres.

5. Dispositif selon la revendication 4, les portions circonférentielles intérieures (24) de profondeur réduite, décalées les unes par rapport aux autres dans la direction axiale, étant disposées approximativement à la même position circonférentielle.

6. Dispositif selon l'une des revendications précédentes, les portions circonférentielles intérieures (24) de profondeur réduite ayant une profondeur = 0 par rapport à un rayon intérieur rᵢ, rₘ, rₐ) du dispositif (1) à partir duquel les logements (14, 16, 42) s'étendent radialement vers l'extérieur.

7. Composé aubes-dispositif d'une turbomachine, comprenant un dispositif (1) selon l'une des revendications précédentes qui est muni d'au moins une rangée d'aubes directrices qui comporte des groupes d'aubes directrices (28).

8. Composé aubes-dispositif selon la revendication 7, le nombre de portions circonférentielles intérieures (24) de profondeur réduite étant inférieur ou égal au nombre de groupes d'aubes directrices (28).

9. Procédé de montage d'un composé aubes-dispositif d'une turbomachine, comprenant les étapes suivantes :
- fourniture d'un dispositif (1) selon l'une des revendications 1 à 6,
- fourniture de groupes d'aubes directrices (28), et
- introduction des groupes d'aubes directrices (28) dans le dispositif (1), le groupe d'aubes directrices (28) introduit en premier étant aligné sur au moins une portion circonférentielle intérieure (24) de profondeur réduite.

10. Turbomachine comprenant un composé aubes-dispositif selon l'une des revendications 7 ou 8.
